# EUROPÄISCHE PATENTSCHRIFT

(11) **EP 1 480 579 B1**
(45) Veröffentlichungstag und Bekanntmachung des Hinweises auf die Patenterteilung: **26.01.2011**
(21) Anmeldenummer: 02783089.2
(22) Anmeldetag: 22.11.2002
(51) Int. Cl.: A61C 17/34, A46B 9/04

(54) **Elektrische Zahnbürste**
Electric toothbrush
Brosse à dents électrique

(30) Priorität: 02.03.2002 DE 10209320
(43) Veröffentlichungstag der Anmeldung: 01.12.2004
(60) Teilanmeldung: 10007774.2
(73) Patentinhaber: Braun GmbH, 61476 Kronberg (DE)
(72) Erfinder: DRIESEN, Georges, 61276 Weilrod (DE); FRITSCH, Thomas, 65817 Eppstein (DE); HARMS, Michael, 61440 Oberursel (DE); HILFINGER, Peter, 61350 Bad Homburg (DE); LIEBERWIRTH, Lars, 61479 Glashütten (DE); SCHWARZ-HARTMANN, Armin, 55234 Wendelsheim (DE)
(86) Internationale Anmeldenummer: PCT/EP2002/013104
(87) Internationale Veröffentlichungsnummer: WO 2003/073958

(56) Entgegenhaltungen:
- EP-A- 0 537 465
- EP-A- 1 093 770
- WO-A-01/43586
- DE-A- 4 412 301
- DE-A- 19 508 932
- DE-A- 19 536 720
- DE-A- 19 745 876
- DE-B- 1 212 036
- DE-B- 1 246 667
- US-B1- 6 178 579

## Beschreibung

Die vorliegende Erfindung betrifft eine elektrische Zahnbürstegemäaß dem oberbegriff von Auspruch 1.

Es sind bereits elektrische Zahnbürsten bekannt, die einen auswechselbaren Zahnbürstenkopf haben. Um den Zahnbürstenkopf beispielsweise bei Verschleiß der Borsten auswechseln zu können, kann der Bürstenkopfträger einen Befestigungsabschnitt zur lösbaren Befestigung am Handteil der Zahnbürste besitzen sowie eine Antriebskupplung zur Ankupplung des Borstenträgers an einen am Handteil angeordneten Antrieb vorgesehen sein. Der Bürstenkopfträger wird mit seinem Befestigungsabschnitt an einem komplementären Befestigungsabschnitt des Handteils verriegelt, damit der Zahnbürstenkopf fest auf dem Handteil sitzt und entsprechende Kräfte beim Putzen übertragen kann.

Es wurde bereits vorgeschlagen, zwischen dem Bürstenkopfträger des auswechselbaren Zahnbürstenkopfs und dem Handteil der elektrischen Zahnbürste einen Bajonettverschluss vorzusehen. Nach einem axialen Aufschieben des auswechselbaren Zahnbürstenkopfs wird dieser um seine Längsachse gedreht, so dass der Bajonettverschluss verriegelt. Hinsichtlich der Antriebskupplung wurde bereits vorgeschlagen, eine teilbare Antriebswelle zu verwenden, wobei ein Teil der Antriebswelle im Zahnbürstenkopf und der andere Teil im Bürstenrohr des Handteils angeordnet sind. Beide Antriebswellenteile tragen endseitig ein Kupplungsstück. Beim Ankuppeln federn die Antriebswellenteile radial, sodaß die Kupplungsstücke übereinander rutschen und verriegeln, um die Antriebswellenteile in Längsrichtung zu verriegeln, da die Antriebswelle im Betrieb in ihrer Längsrichtung hin- und hergeht.

Die bislang verwendeten Zahnbürstenwechselköpfe sind jedoch hinsichtlich ihrer Befestigung am Handteil und hinsichtlich ihrer Ankupplung an den handteilseitigen Antriebsstrang verbesserungsfähig. Aus der WO 01/43586 A1, DE 197 45 876 A1 und DE 195 36 720 A1 sind Aufsteckbürsten bekannt, die nach einem axialen Aufstecken auf ein zugehöriges Handteil durch axialen Zug wieder vom Handteil entfernt werden können.

Der vorliegenden Erfindung liegt daher die Aufgabe zugrunde, einen verbesserten Zahnbürstenkopf und ein verbessertes Handteil einer elektrischen Zahnbürste zu schaffen, die die Nachteile des Standes der Technik vermeiden und letzteren in vorteilhafter Weise weiterbilden. Vorzugsweise soll eine einfach zu handhabende und billig herzustellende Lösung geschaffen werden, bei der die Zahnbürstenköpfe gegen ein unbeabsichtigtes Lösen vom Handteil während des Zähneputzens gesichert sind.

Diese Aufgabe wird erfindungsgemäß durch eine elektrische zahnbüurste gemäß Patentanspruch 1 gelöst. Bevorzugte Ausgestaltungen der Erfindung sind Gegenstand der Unteransprüche.

Es ist erfindungsgemäß vorgesehen, dass am Befestigungsabschnitt des Bürstenkopfträgers Verrastmittel vorgesehen sind, die bei geradlinigem, axialem Aufschieben des Bürstenkopfträgers auf das Handteil der Zahnbürste mit den daran vorgesehenen Rastmitteln verrasten. Der Zahnbürstenkopf wird damit ohne Drehbewegungen, wie sie bei einem Bajonettverschluss notwendig sind, durch einfaches axiales Aufschieben auf den Handteil an diesem verriegelt. Insbesondere ist vorgesehen, dass die Verrastmittel durch radialen Druck auf den Bürstenkopfträger der Zahnbürste lösbar sind, so dass durch eine einfache Einhandbedienung ein auszuwechselnder Zahnbürstenkopf vom Handteil heruntergeschoben werden kann. Es braucht lediglich mit dem Daumen im Bereich der Verrastmittel auf den Bürstenkopfträger gedrückt und dieser nach vorne abgeschoben zu werden, während das Handteil der Zahnbürste in der Handfläche von den übrigen Fingern gehalten wird. Eine Drehbewegung zum Abziehen des Zahnbürstenkopfes ist nicht notwendig.

Als Verrastmittel ist em Zahnbüurstenkopt eine Federzunge mit einem Rasthaken vorgeschen sowie am gegenüberliegenden Befestigungsteil eine entsprechende Rasthinterschneidung bzw. - ausnehmung, in die die Federzunge mit ihrem Rasthaken einschnappen kann. Die Federzunge federt unter dem Druck radial nach innen, so dass der Rasthaken aus der Rastausnehmung herausschnappt.

Vorzugsweise sind die Befestigungsabschnitte des Zahnbürstenkopfs und des Handteils, die übereinander geschoben werden, derart ausgebildet, dass die Verrastung lediglich Kräfte in axialer Richtung, d.h. in Längsrichtung der Zahnbürste abfangen muss. Biegekräfte und/oder Torsionskräfte, die auf die Verbindung zwischen dem Zahnbürstenkopf und dem Handteil wirken, werden mittels eigener Verbindungs- bzw. Befestigungsmittel abgefangen und insbesondere kann zwischen dem Bürstenkopfträger und dem Handteil eine Schiebeführung in Form von Längsrippen und Längsnuten, die ineinander geschoben werden, vorgesehen sein. Die formschlüssige Aufschiebeführung sichert das Handteil und den Zahnbürstenkopf gegen Verdrehung und überträgt darüber hinaus Biegekräfte beim Putzen der Zähne. Vorzugsweise ist die Schiebeführung so ausgebildet, dass ein Aufschieben des Zahnbürstenkopfes in nur einer Drehstellung gestattet ist. Sie bildet insofern eine Drehcodierung, die ein Aufschieben des Zahnbürstenkopfes in falscher Ausrichtung verhindert.

Gemäß einem weiteren Aspekt der vorliegenden Erfindung zeichnet sich der Zahnbürstenkopf hinsichtlich seiner Antriebskupplung, mit Hilfe derer der Borstenträger an den handteilseitigen Antriebsstrang angekuppelt werden kann, dadurch aus, dass ausschließlich Kräfte und Bewegungen quer zur Zahnbürstenlängsachse von dem handteilseitigen Antriebsstrang übertragen werden. Die Antriebskupplung besitzt Eingriffselemente, die in Querrichtung wirksam sind, so dass es möglich wird, auch sich quer zur Zahnbürstenlängsrichtung bewegende Antriebsübertrager anzukuppeln. Der Verzicht auf eine in Längsrichtung wirksame Ankupplung des Antriebsstranges ermöglicht es, die Kupplungselemente besonders einfach auszubilden. Es versteht sich, dass die genannte Art der Antriebskupplung auch dann besonders vorteilhaft ist, wenn die Verriegelung zwischen dem Bürstenkopfträger und dem Handteil nicht durch ein axiales Verrasten, sondern beispielsweise durch einen Bajonettverschluss oder dergleichen erfolgt was 1 edoch incht Fül des Erfindung ist. Besondere Vorteile jedoch ergeben sich in Verbindung mit der Verrastung, da bei einem Verzicht auf ein Ankuppeln in Längsrichtung keine Kräfte in Längsrichtung übertragen werden und dementsprechend auch nicht auf die Verrastung wirken können.

In Weiterbildung der Erfindung liegt die Kuppelstelle des Antriebsstranges unmittelbar am Borstenträger und es ist im Zahnbürstenkopf kein eigenes separates Übertragerelement vorgesehen, d.h. das handteilseitige Antriebselement wird unmittelbar an den Borstenträger angekuppelt. Vorteilhafterweise braucht somit beim Austausch eines verschlissenen Zahnbürstenkopfes kein Übertragerelement weggeworfen werden und das Austauschteil, d.h. der Zahnbürstenkopf zeichnet sich durch billige Herstellbarkeit aus.

Als Antriebselement, dass an den Borstenträger angekuppelt wird, ist insbesondere eine Antriebswippe vorgesehen, die im Gehäuse des Handteils wippbar gelagert ist. Es kann eine mehrachsige wippbar gelagerte Antriebswippe vorgesehen sein, die von einem auf der Motorwelle sitzenden Exzenter derart antreibbar ist, dass sie eine doppelkegelförmige Umlaufbewegung ausführt. Mit ihrem zahnbürstenkopfseitigen Ende steht die Antriebswippe aus dem Gehäuse des Handteiles stirnseitig heraus, so dass sie mit dem Borstenträger des Zahnbürstenkopfes gekuppelt werden kann.

In besonders vorteilhafter Weise ist als Antriebskupplung in dem Borstenträger eine Ausnehmung ausgebildet, in die das handteilseitige Antriebselement, insbesondere das herausstehende Ende der Antriebswippe beim Aufstecken des Zahnbürstenkopfs auf das Handteil einfädelt.

Um das Einfädeln zu erleichtern, kann dem Borstenträger eine Einkuppelhilfe zugeordnet sein, die den Borstenträger und das handteilseitige Antriebselement beim Aufstecken des Zahnbürstenkopfs zueinander ausrichtet. Insbesondere kann einerseits dem Borstenträger ein Bewegungsbegrenzer zugeordnet sein, so dass dieser mit seiner Antriebskupplung in Form der Ausnehmung immer der Antriebswippe zugewandt bzw. in Aufschieberichtung ausgerichtet ist. Andererseits können an dem Borstenträger Einführschrägen vorgesehen sein, die das handteilseitige Antriebselement, insbesondere das borstenträgerseitige Ende der Antriebswippe beim Aufstecken des Zahnbürstenkopfs einfangen.

In besonders bevorzugter Ausgestaltung der Erfindung ist als Antriebskupplung in einer Mantelfläche des Borstenträgers ein Längsschlitz vorgesehen, der sich in Aufschieberichtung erweitert. Das borstenträgerseitige Ende der Antriebswippe, die im Handteil gelagert ist, ist vorzugsweise kugelkalottenförmig ausgebildet. Die Flanken der Ausnehmung im Borstenträger laufen bei der hin- und hergehenden Bewegung der Antriebswippe auf dem Kugelkopf der Antriebswippe ab.

In Weiterbildung der Erfindung ist der Borstenträger um eine Drehachse quer zur Längsachse des Bürstenkopfs drehbar gelagert, und zwar vorzugsweise nur über einen begrenzten Winkelbereich, so dass die Ausrichtung des Borstenträgers zum Ankuppeln gewährleistet ist. In Richtung der Drehachse kann der Borstenträger unbeweglich gelagert sein. Durch die längsschlitzförmige Ausnehmung in dem Borstenträger, in dem die Antriebswippe läuft, wird die Komponente der doppelkegelförmigen Umlaufbewegung der Antriebswippe in Richtung der Drehachse des Borstenträgers kompensiert. Die Antriebskupplung ist insoweit in Richtung der Drehachse des Borstenträgers freigängig. Der Borstenträger wird nur rotatorisch oszillierend angetrieben.

In alternativer Weiterbildung der Erfindung kann der Borstenträger, um eine Stocherbewegung auszuführen, zusätzlich zu seiner Drehbarkeit auch in Richtung der Drehachse translatorisch beweglich gelagert sein. Die Antriebskupplung besitzt in diesem Fall Eingriffsmittel zur Übertragung von Antriebsbewegungen und -kräften in Richtung der Drehachse. Die doppelkegelförmige Bewegung der Antriebswippe wird insofern einerseits in eine Stocherbewegung des Borstenträgers und andererseits in eine rotatorisch oszillierende Borstenträgerbewegung um seine Drehachse umgewandelt. Die kuppelbare Verbindung ist dabei in kinematischer Hinsicht kugelgelenkartig ausgebildet. Anstelle des zuvor beschriebenen Längsschlitzes kann eine runde oder gegebenenfall leicht ovale bzw. elliptische Ausnehmung in der Mantelfläche des Borstenträgers vorgesehen sein, die die kreisbahnförmige Bewegung des borstenträgerseitigen Endes der Antriebswippe quer zur Borstenträgerdrehachse sowie parallel zur Borstenträgerdrehachse überträgt. Auch in diesem Fall erweitert sich die Ausnehmung zur Antriebswippe hin, beispielsweise durch Schrägen, Rundungen oder dergleichen im wesentlichen trichterförmig.

Weiterer Vorteile, Anwendungsmöglichkeiten und vorteilhafte Merkmale der Erfindung ergeben sich aus der nachfolgenden Beschreibung eines Ausführungsbeispieles der Erfindung, die in den Figuren der Zeichnung dargestellt ist. In der Zeichnung zeigt:
- Figur 1: eine perspektivische Ansicht einer elektrischen Zahnbürste mit einem auf das Handteil der Zahnbürste aufsteckbaren Bürstenkopf mit einem rotatorisch an- treibbaren Borstenfeld und einem feststehenden Borstenfeld gemäß einer be- vorzugten Ausführung der Erfindung,
- Figur 2: eine perspektivische, ausschnittsweise Explosionsdarstellung der Zahnbürste aus Figur 1, die den Zahnbürstenkopf in einer vom Handteil abgezogenen Stellung zeigt,
- Figur 3: eine ausschnittsweise Seitenansicht der Zahnbürste, die den Zahnbürstenkopf ähnlich Figur 2 in einem vom Handteil abgezogenen Zustand zeigt, und
- Figur 4: einen ausschnittsweisen Längsschnitt durch die Zahnbürste aus den vorher- gehenden Figuren, der den Zahnbürstenkopf auf das Handteil aufgesteckt zeigt.

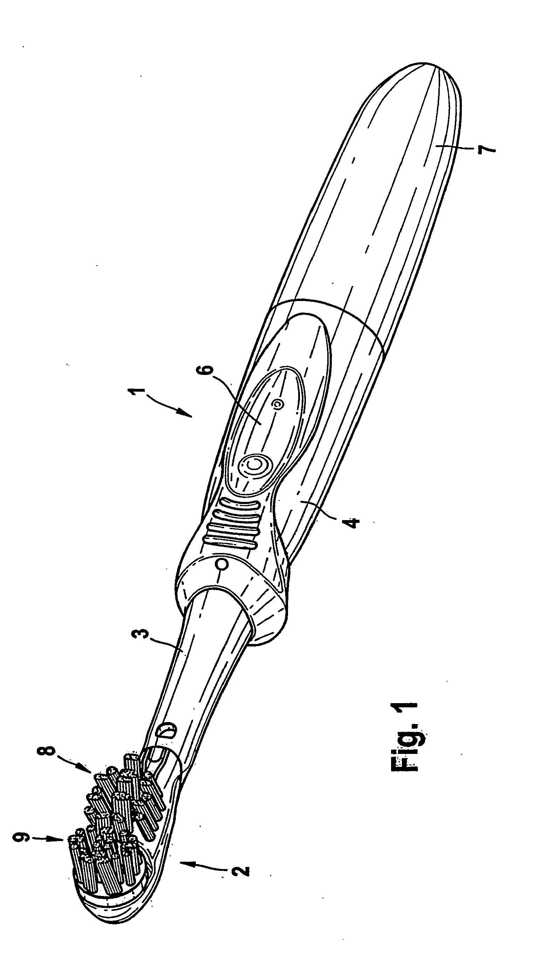

Die in Figur 1 gezeigte Zahnbürste umfasst ein Handteil 1 sowie einen Zahnbürstenkopf 2, der auf einem Bürstenrohr 3 sitzt, das ein stirnseitiges Ende des Handteils 1 bildet bzw. damit verbunden ist. Das Handteil 1 wird von einem Zahnbürstengehäuse 4 gebildet, in dem axial hintereinander ein Batterieaufnahmefach und ein Antriebsmotor 5 angeordnet sind. Mittels eines Schalters 6 auf der Mantelfläche des Gehäuses 4 kann der Motor 5 ein- und ausgeschaltet werden. Das Gehäuse 4 ist im Bereich des Handteils 1 zweiteilig ausgebildet und eine Gehäusekappe 7 kann von einem den Motor aufnehmenden Gehäuseabschnitt abgeschraubt werden.

Der Bürstenkopf 2 besitzt zwei Borstenfelder, nämlich ein feststehendes Borstenfeld 8 sowie ein unmittelbar am Kopfende liegendes, antreibbares Borstenfeld 9, das um eine quer zur Zahnbürstenlängsachse verlaufende Drehachse rotatorisch oszillierend angetrieben werden kann.

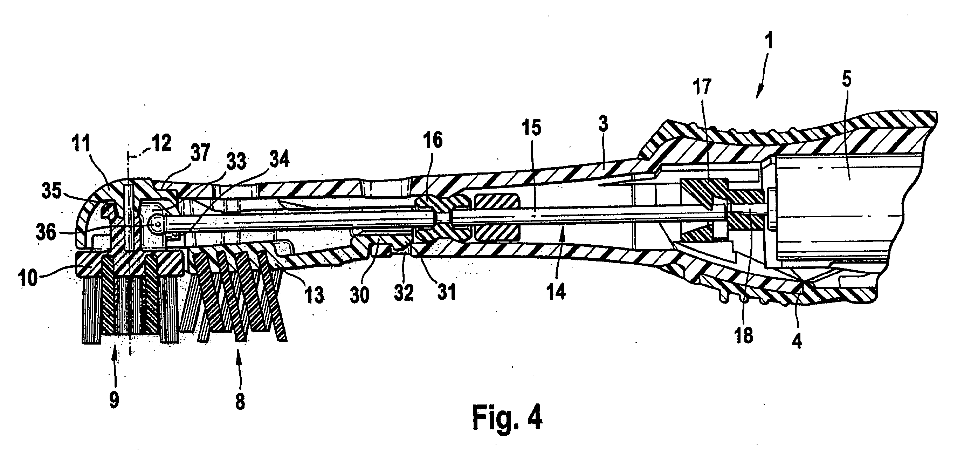

Wie Figur 4 zeigt, wird das antreibbare Borstenfeld 9 von einem Borstenträger 10 getragen, der zum Borstenfeld hin etwa kreisplattenförmig ausgebildet ist und an einem Bürstenkopfträger 11 befestigt ist. Wie Figur 4 zeigt, sitzt der Borstenträger 10 drehbar auf einer im Bürstenkopfträger 11 verankerten Drehachse 12.

Das feststehende Borstenfeld 8 wird von einem starr mit dem Bürstenkopfträger 11 verbundenen Borstenträger 13 getragen, der vorzugsweise unmittelbar Teil des Bürstenkopfträgers 11 bzw. daran integral angeformt sein kann.

Der bewegliche Borstenträger 10 wird vom Motor 5 her mittels eines Übertragers 14 in Form einer Antriebsschwinge 15 rotatorisch oszillierend um die Drehachse 12 angetrieben. Die Antriebsschwinge 15 ist als gerader Metallstab frei von Kröpfungen, Abwinklungen und dergleichen ausgebildet und wird zwischen dem Motorstück und dem Borstenträger 10 im Handteil 1 bzw. im Bürstenrohr 3 von einem Lager 16 gelagert. Das Lager 16 ist als elastischer Lagerstopfen in Form eines Ringes bzw. einer Hülle ausgebildet, der eine Abdichtung zwischen der Antriebsschwinge 15 und der Gehäusewandung des Bürstenrohres 3 bildet. Hierdurch wird Eindringen von Feuchtigkeit in das Innere des Handteilgehäuses 4 verhindert.

Das Lager 16 erlaubt ein mehrachsiges Verschwenken der Antriebsschwinge 15 um Achsen, die in einer zur Längsrichtung der Zahnbürste senkrechten Ebene liegen. Angetrieben wird die Antriebsschwinge 15 von einem Exzenter 17, der drehfest auf einer Motorwelle 18 sitzt, die sich in Längsrichtung der Zahnbürste erstreckt. Vom Exzenter 17 angetrieben führt die Antriebsschwinge 15 eine doppelkegelförmige Taumel- bzw. Umlaufbewegung aus, wobei die Spitzen der beiden Kegel etwa im Bereich des Lagers 16 liegen. Die beiden Enden der Antriebsschwinge 15 führen eine Kreisbahnbewegung jeweils in einer zur Längsrichtung der Zahnbürste senkrechten Ebene aus.

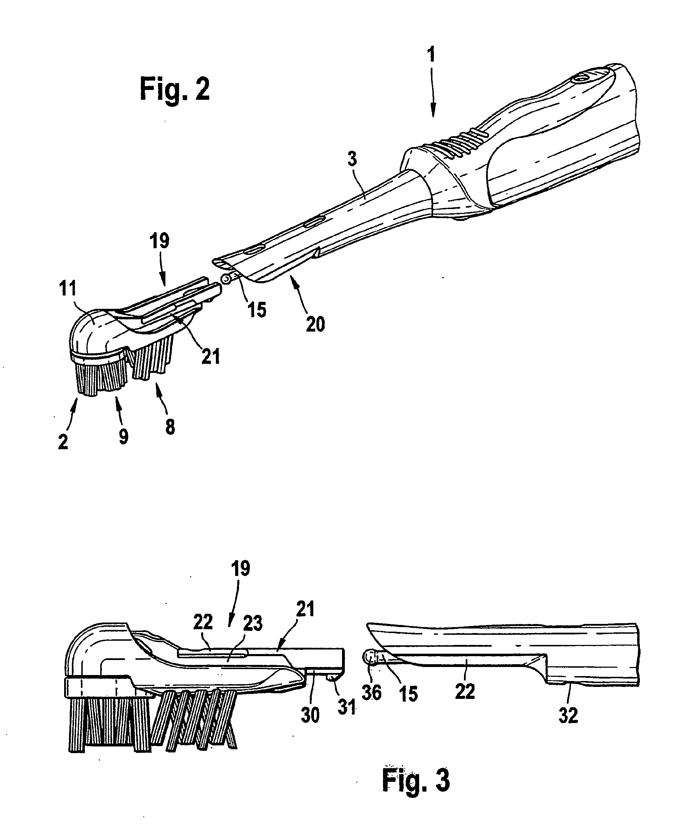

Wie die Figuren 2 und 3 verdeutlichen, ist der Bürstenkopf 2 an dem Bürstenrohr 3 lösbar befestigt. Er kann in besonders einfacher Weise abgezogen bzw. -geschoben werden, wie noch erläutert wird. Der Bürstenkopfträger 11 besitzt einen Befestigungsabschnitt 19, mit dem er auf einen bzw. in einen entsprechenden Befestigungsabschnitt 20 am stirnseitigen Ende des Bürstenrohrs 3 geschoben werden kann. Die beiden Befestigungsabschnitte 19 und 20 sind beide jeweils etwa halbschalenförmig ausgebildet und ergänzen sich passgenau, so dass sie im zusammengeschobenen Zustand ein Hohlprofil bilden, das das Bürstenrohr 3 fortsetzt.

Wie die Figuren 2 bis 4 zeigen, sind an den Befestigungsabschnitten 19 und 20 formschlüssig wirkende Eingriffsmittel vorgesehen, die einerseits Biegekräfte vom Bürstenkopf 2 auf das Bürstenrohr 3 übertragen und andererseits eine Torsion des Bürstenkopfs 2 relativ zum Bürstenrohr 3 verhindern. Insbesondere ist eine Schiebeführung zwischen dem Bürstenkopfträger 11 und dem Bürstenrohr 3 vorgesehen. Wie Figur 3 zeigt, sind an dem Befestigungsabschnitt 19 des Bürstenkopfträgers 11 und dem Befestigungsabschnitt 20 am Bürstenrohr 3 Längsrippen 22 und Längsnuten 23 vorgesehen, die beim Aufschieben des Bürstenkopf 2 ineinander greifen. Der Bürstenkopf 2 kann axial, d.h. in Längsrichtung der Zahnbürste auf das Bürstenrohr 3 aufgeschoben werden. Die axiale Eingriffslänge der Schiebeführung 21 ist ausreichend lang, um eine stabile Verankerung zu erreichen. Sie kann mindestens dem Durchmesser des Bürstenrohrs 3 entsprechen.

Um den Bürstenkopf 2 in axialer Richtung am Handteil 1 bzw. dem Bürstenrohr 3 zu sichern, ist zwischen dem Bürstenkopfträger 11 und dem Handteil 1 eine Verrastvorrichtung vorgesehen, die beim Aufschieben des Bürstenkopfs 2 in axialer Richtung automatisch verrastet und andererseits durch radialen Druck auf das Bürstenrohr 3 bzw. dem Bürstenkopfträger 11 wieder gelöst werden kann. Wie Figur 3 zeigt, ist an dem Bürstenkopfträger 11 des Bürstenkopfs 2 eine zum Handteil 1 hin vorspringende Federzunge 30 angeformt, die sich in etwa axial erstreckt und an ihrem Ende Rastmittel 31 trägt, die als Rasthaken ausgebildet sind. Die Federzunge 30 kann radial, d.h. gemäß Figur 3 nach oben federn, um beim Aufschieben des Bürstenkopfs 2 zurückfedern zu können. Am Bürstenrohr 3 sind zu den Rastmitteln 31 komplementäre Rastmittel vorgesehen. Wenn an der Federzunge 30 ein Rasthaken vorgesehen ist, ist als Rastmittel 32 am Bürstenrohr 3 eine Hinterschneidung, insbesondere ein lochförmiger Durchbruch im Gehäuse vorgesehen. Beim Aufschieben des Bürstenkopfs 2 schiebt sich die Federzunge 30 mit den Rastmitteln 31 über die Wandung des Bürstenrohres 3. Erreicht der Rasthaken 31 den Durchbruch 32, federt die Federzunge 30 radial nach außen zurück und der Rasthaken 31 schnappt ein. Zweckmäßigerweise sind an der Federzunge 30 bzw. dem Rasthaken 31 Auslaufschrägen vorgesehen.

Beim Aufschieben des Bürstenkopfs 2 wird gleichzeitig automatisch der Übertrager 14 mit dem beweglichen Borstenträger 10 gekuppelt. Die Antriebskupplung erfolgt unmittelbar am Borstenträger 10. Wie Figur 4 zeigt, ist an einer dem Handteil 1 zugewandten Mantelfläche des Borstenträgers 10 eine Ausnehmung zur Aufnahme des borstenträgerseitigen Endes des Übertragers 14 vorgesehen. In der gezeichneten Ausführungsform ist die Ausnehmung 33 im Borstenträger 10 ein sich parallel zur Drehachse 12 erstreckender Längsschlitz bzw. eine Längsnut, in der das borstenträgerseitige Ende der Antriebswippe 15 parallel zur Drehachse 12 auf- und abfahren kann. Die schlitzförmige Ausnehmung 33 erweitert sich zum Übertrager 14 hin V-förmig. Die Ränder der Ausnehmung 33 bilden Einfangschrägen 34, die beim Aufschieben des Bürstenkopfs 2 auf das Handteil 1 das Ende der Antriebsschwinge 15 einfangen, so dass diese in die schlitzförmige Ausnehmung 33 einfädelt. Um zu verhindern, dass sich der Borstenträger 10 im demontierten Zustand des Bürstenkopfs 2 zu weit verdreht und somit beim Aufschieben die Antriebsschwinge 15 nicht mehr einfädeln kann, ist der Drehbereich des Borstenträgers 10 um die Drehachse 12 begrenzt. Entsprechende Drehanschläge 35 am Borstenträger 10 und dem Bürstenkopfträger 11 begrenzen die Verdrehbarkeit und sorgen dafür, dass die Ausnehmung 33 stets in Aufschieberichtung ausgerichtet ist.

Das borstenträgerseitige Ende der Antriebswippe 15 ist kugelkalottenförmig ausgebildet. Der Kugelkopf ist passgenau in der Ausnehmung 33 geführt, d.h. die Breite der Ausnehmung 33 quer zur Längsmittelebene der Zahnbürste ist auf den Durchmesser des Kugelkopfs 36 gegebenenfalls mit etwas Spiel abgestimmt. Die von der Ausnehmung 33 und dem Kugelkopf 36 gebildete Antriebskupplung überträgt also Kräfte quer zur Längsachse der Zahnbürste, jedoch keine Kräfte in Längsrichtung der Zahnbürste. Beim doppelkegelförmigen Umlaufen der Antriebswippe 15 gleitet der Kugelkopf 36 an den Wandungen der Ausnehmung 33 ab, da der Übertrager 14 sich nicht um die Längsachse drehen kann. Durch die längsschlitzförmige Ausbildung der Ausnehmung 33 werden Auf- und Abbewegungen des Kugelkopfs 36 kompensiert, d.h. nicht übertragen, da die Antriebskupplung insofern freigängig ist. Quer zur Längsrichtung, d.h. senkrecht zur Zeichenebene der Figur 4 werden die Antriebsbewegungen jedoch übertragen, so dass eine rotatorisch oszillierende Bewegung des Borstenträgers 10 erreicht wird.

Wie Figur 4 zeigt, sitzen die Ränder der Befestigungsabschnitte 19 und 20 des Bürstenkopfs 2 bzw. des Bürstenrohrs 3 im zusammengebauten Zustand passgenau aufeinander, wobei die Ränder eine übereinanderschiebbare, abgestufte Kontur 37 haben können.

## Patentansprüche

1. Elektrische Zahnbürste mit einem Zahnbürstenkopf und einem Handteil, wobei
der Zahnbürstenkopf einen Bürstenkopfträger (11) aufweist, an dem ein Borstenträger (10) mit einem Borstenfeld (9) beweglich gelagert ist, wobei der Bürstenkopfträger einen Befestigungsabschnitt (19) zur lösbaren Befestigung an dem Handteil (1) der Zahnbürste aufweist und eine Antriebskupplung (33, 36) zur Ankupplung des Borstenträgers (10) an einen im Handteil angeordneten Antrieb (5, 14) vorgesehen ist, wobei am Befestigungsabschnitt (19) Verrastmittel (31) vorgesehen sind, die beim, im wesentlichen geradlinigen, axialen Aufschieben des Bürstenkopfträgers (10) auf das Handteil (1) der Zahnbürste mit daran vorgesehenen Verrastmitteln (32) verrasten und
das Handteil ein Gehäuse (4) aufweist, in dem der Antrieb (5; 14) zum Antreiben des Borstenträgers (10) am Zahnbürstenkopf (2) vorgesehen ist, wobei das Gehäuse (4) einen Befestigungsabschnitt (20) zur Befestigung des Zahnbürstenkopfs (2) aufweist, wobei am Befestigungsabschnitt (20) die Verrastmittel (32) vorgesehen sind,
wobei als Verrastmittel am Zahnbürstenkopf eine Federzunge (30) mit einem Rasthaken (31) vorgesehen ist, die radial federnd ausgebildet und mit einer am Handteil (1) vorgesehenen Rastausnehmung (32) verrastbar ist,
**dadurch gekennzeichnet, dass** der Rasthaken (31) durch radialen Druck auf den Bürstenkopfträger (11) im Bereich der Federeunge (30) der Zahnbürste lösbar ist.

2. Elektrische Zahnbürste nach dem vorhergehenden Anspruch, wobei die Antriebskupplung (33, 36) unmittelbar am Zorstenträger (10) vorgesehen ist und der Zahnbürstenkopf frei von eigenen Antriebswellen, -wippen, -stäben ausgebildet ist.

3. Elektrische Zahnbürste nach einem der vorhergehenden Ansprüche, wobei die Antriebskupplung (33, 36) Kupplungsmittel aufweist, die mit einer handteilseitigen Antriebswippe (15) kuppelbar sind.

4. Elektrische Zahnbürste nach Auspruch 3 wobei als Antriebskupplung in dem Borstenträger (10) eine Ausnehmung (33) ausgebildet ist, in die ein Kugelkopt (36) der handteilseitigen Antriebs-wippe (15) beim Aufstecken des Zahnbürstenkopfs auf das Handteil (1) einfädelt.

5. Elektrische Zahnbürste nach einem der vorhergehenden Ansprüche, wobei dem Borstenträger (10) eine Einkuppelhilfe (34) zugeordnet ist, die die Antriebskupplung und ein handteilseitiges Antriebselement (14) beim Aufstecken des Zahnbürstenkopfs zueinander ausrichtet, wobei vorzugsweise dem Borstenträger (10) ein Bewegungsbegrenzer (35), der dessen Bewegbarkeit beschränkt, zugeordnet ist und an dem Borstenträger (10) Einführschrägen (34) vorgesehen sind, die das handteilseitige Antriebselement (14) beim Aufstecken des Zahnbürstenkopfs einfangen.

6. Elektrische Zahnbürste nach einem der vorhergehenden Ansprüche, wobei der Borstenträger (10) um eine Drehachse (12) quer zur Längsrichtung des Bürstenkopfträgers (11) an diesem drehbar gelagert ist.

7. Elektrische Zahnbürste nach einem der vorhergehenden Ansprüche, wobei der Borstenträger (10) in Richtung der Drehachse unbeweglich am Bürstenkopfträger (11) befestigt ist und die Antriebskupplung (33, 36) in Richtung der Drehachse (12) freigängig ausgebildet ist.

8. Elektrische Zahnbürste nach Anspruch 6, wobei der Borstenträger (10) in Richtung der Drehachse (12) beweglich gelagert ist und die Antriebskupplung Eingriffsmittel zur Übertragung von Antriebsbewegungen und -kräften in Richtung der Drehachse (12) aufweist.

9. Elektrische Zahnbürste nach einem der vorhergehenden Ansprüche, wobei der Bürstenkopfträger (11) eine Drehcodierung, insbesondere eine Einschiebeführung (21) vorzugsweise in Form von Längsrippen (22) und/oder -nuten (23) aufweist.

10. Elektrische Zahnbürste nach einem der vorhergehenden Ansprüche, wobei die Rastausnehmung (32) am Handteil als lochförmiger Durchbruch im Gehäuse (4) realisiert ist.

## Claims

1. Electric toothbrush having a toothbrush head and a hand piece, wherein the toothbrush head comprises a brush head holder (11), on which a bristle holder (10) having a bristle field (9) is flexibly mounted, wherein the brush head holder comprises a fixing section (19) for detachable fixing to the hand piece (1) of the toothbrush, and a drive coupling (33, 36) is provided for connecting the bristle holder (10) to a drive (5, 14) installed in the hand piece, wherein the latching means (31) are provided at the fixing section (19), which lock during essentially linear, axial sliding of the brush head holder (10) on the hand piece (1) of the toothbrush with the latching means (32) provided thereon, and the hand piece (1) comprises a housing (4), in which the drive (5;14) is provided for activating the bristle holder (10) at the toothbrush head (2), wherein the housing (4) comprises a fixing section (20) for fastening the toothbrush head (2), wherein the latching means (32) are provided at the fixing section (20), wherein a flexible tongue (30) having a snap arm (31) is provided as a fixing means at the toothbrush head, which is designed radially resilient and having a locking catch recess (32) provided at the hand piece (1), **characterized in that** the snap arm (31) is detachable by radial pressure on the brush head holder (11) in the region of the flexible tongue (30) of the toothbrush.

2. Electric toothbrush according to the preceding claim, wherein the drive coupling (33,36) is provided directly on the bristle holder (10) and the toothbrush head is designed free from its own drive shafts, drive rockers, and drive rods.

3. Electric toothbrush according to one of the preceding claims, wherein the drive coupling (33, 36) comprises couplants, which can be coupled with the hand piece side drive rocker (15).

4. Electric toothbrush according to claim 3, wherein as the drive coupling in the bristle holder (10), a recess (33) is designed in which a spherical head (36) of the hand piece side drive rocker (15) is threaded during insertion of toothbrush head on the hand piece (1).

5. Electric toothbrush according to one of the preceding claims, wherein a clutch (34) is attached to the bristle holder (10), which aligns the drive coupling and a hand piece side drive element (14) to each other during insertion of the toothbrush head, wherein preferably a movement limiter (35) restraining its maneuverability is attached to the bristle holder (10) and chamfers (34) are provided to the bristle holder (10), which align the hand piece side driving element (14) during insertion of toothbrush head.

6. Electric toothbrush according to one of the preceding claims, wherein the bristle holder (10) is pivot-mounted on this around an axis of rotation (12) across the longitudinal direction of the brush head holder (11).

7. Electric toothbrush according to one of the preceding claims, wherein the bristle holder (10) is fastened rigidly to the brush head holder (11) in the direction of the axis of rotation and the drive coupling (33, 36) is designed to move freely in the direction of the axis of rotation (12).

8. Electric toothbrush according to claim 6, wherein the bristle holder (10) is movably mounted in the direction of the axis of rotation (12) and the drive coupling comprises an engagement means for transmission of drive movements and drive forces in the direction of the axis of rotation (12).

9. Electric toothbrush according to one of the preceding claims, wherein the brush head holder (11) comprises a rotary coding, especially an insertion guide (21), preferably in the form of longitudinal ribs (22) and/or lengthwise slots (23).

10. Electric toothbrush according to one of the preceding claims, wherein the latching means (32) is executed at the hand piece as a cavity-shaped aperture in the housing (4).

## Revendications

1. Brosse à dents électrique présentant une tête de brosse à dents et une pièce à main, dans laquelle
la tête de brosse à dents présente un support de tête de brosse (11) sur lequel est logé de manière mobile un support de poils (10) avec une zone de poils (9), le support de tête de brosse présentant une section de fixation (19) destinée à la fixation amovible sur la pièce à main (1) de la brosse à dents et un accouplement d'entraînement (33, 36) étant prévu pour l'accouplement du support de poils (10) à un dispositif d'entraînement (5, 14) disposé dans la pièce à main, des moyens de verrouillage (31) étant prévus sur la section de fixation (19), qui s'enclenchent avec les moyens de verrouillage (32) prévus sur la pièc à main lors du coulissage axial, essentiellement linéaire, du support de tête de brosse (10) sur la pièce à main (1) et
la pièce à main présente un boîtier (4), dans lequel est prévu le dispositif d'entraînement (5; 14) pour entraîner le support de poils (10) sur la tête de brosse à dents (2), le boîtier (4) présentant une section de fixation (20) destinée à la fixation de la tête de brosse à dents (2), les moyens de verrouillage (32) étant prévus sur la section de fixation (20),
une lame flexible (30) dotée d'un crochet de verrouillage (31) étant prévue comme moyen de verrouillage sur la tête de brosse à dents, ledit crochet étant réalisé avec un effet de ressort radial et verrouillable avec un évidement de verrouillage (32) prévu sur la pièce à main (1),
**caractérisée en ce que** le crochet de verrouillage (31) peut être libéré par un appui radial sur le support de tête de brosse (11) au niveau de la lame flexible (30) de la brosse à dents.

2. Brosse à dents électrique selon la revendication précédente, dans laquelle l'accouplement d'entraînement (33,36) est prévu directement sur le support de poils (10) et la tête de brosse à dents est réalisée sans présenter d'arbres, de bascules, de tiges d'entraînement qui lui sont propres.

3. Brosse à dents électrique selon l'une quelconque des revendications précédentes, dans laquelle l'accouplement d'entraînement (33, 36) présente des moyens d'accouplement qui peuvent être accouplés avec une bascule d'entraînement (15) se trouvant sur la pièce à main.

4. Brosse à dents électrique selon la revendication 3, dans laquelle l'accouplement d'entraînement dans le support de poils (10) est constitué par un évidement (33) dans lequel une tête sphérique (36) de la bascule d'entraînement (15) se trouvant sur la pièce à main s'emmanche lors de l'enfilage de la tête de brosse à dents sur la pièce à main (1).

5. Brosse à dents électrique selon l'une quelconque des revendications précédentes, dans laquelle le support de poils (10) est associé à un moyen auxiliaire d'engagement (34), qui oriente l'un par rapport à l'autre l'accouplement d'entraînement et un élément d'entraînement (14) se trouvant sur la pièce à main lors de l'enfilage de la tête de brosse à dents, le support de poils (10) étant de préférence associé à un limiteur de mouvement (35), qui limite sa mobilité, et des biseaux d'insertion (34) étant prévus sur le support de poils (10), qui accrochent l'élément d'entraînement (14) sur la pièce à main lors de l'enfilage de la tête de brosse à dents.

6. Brosse à dents électrique selon l'une quelconque des revendications précédentes, dans laquelle le support de poils (10) est logé de manière rotative autour d'un axe de rotation (12), transversalement par rapport à la direction longitudinale du support de brosse à dents (11).

7. Brosse à dents électrique selon l'une quelconque des revendications précédentes, dans laquelle le support de poils (10) est fixé au support de tête de brosse (11) de manière immobile dans le sens de l'axe de rotation et l'accouplement d'entraînement (33, 36) est réalisé de manière à pouvoir bouger librement dans le sens de l'axe de rotation (12).

8. Brosse à dents électrique selon la revendication 6, dans laquelle le support de poils (10) est logé de manière mobile dans le sens de l'axe de rotation (12) et l'accouplement d'entraînement présente des moyens d'agrippement pour la transmission des mouvements et des forces d'entraînement dans le sens de l'axe de rotation (12).

9. Brosse à dents électrique selon l'une quelconque des revendications précédentes, dans laquelle le support de brosse à dents (11) présente un codage de rotation, en particulier un guidage d'insertion (21), de préférence sous forme de nervures (22) et/ou de rainures (23) longitudinales.

10. Brosse à dents électrique selon l'une quelconque des revendications précédentes, dans laquelle l'évidement de verrouillage (32) sur la pièce à main est réalisé comme un percement ayant la forme d'un trou dans le boîtier (4).
